# EUROPEAN PATENT APPLICATION

(11) **EP 4 644 722 A1**
(43) Date of publication of application: **05.11.2025**
(21) Application number: 25172195.7
(22) Date of filing: 24.04.2025
(51) Int. Cl.: F16D 65/12

(54) **BRAKE DISC**

(30) Priority: 30.04.2024 IT 202400009733
(71) Applicant: Brembo SGL Carbon Ceramic Brakes S.p.A., 24040 Stezzano (BG) (IT)
(72) Inventor: CARNEVALI, Guido, 21057 Olgiate Olona (VA) (IT); PALOMINO SOLIS, Daniel Angel, 27010 Bornasco (PV) (IT)
(74) Representative: Fabiano, Piero

(57) **Abstract**

A brake disc (1) is described, comprising a brake bell (2) and a braking band (3) radially outer with respect to the latter, said band (2) and said brake bell (3) extending around a common axis of rotation (X-X); said braking band (2) being made of a composite material and having side braking surfaces (4) adapted to cooperate with a respective brake caliper thus exerting a braking action on the vehicle on which said brake disc (1) is installed; said side surfaces (4) defining, in addition, a plurality of ventilation channels (5) arranged away from the axis of rotation (X-X), said ventilation channels (5) extending along an extent direction (Z-Z) between a radially inner air opening (6) and a radially outer air opening (7), characterized in that said extent direction (Z-Z) is inclined so as to form an elevation angle (θ) less than 90° with respect to the axis of rotation (X-X).

## Description

### Field of the invention

The present invention relates to a brake disc for disc braking systems. In particular, the invention relates to brake discs for high-performance vehicles, provided with a braking annulus or band made of carbonaceous-matrix composite material, coaxially and internally to which a metal bell-shaped element integral therewith is provided.

### Known art

The following documents describe some examples of braking systems in particular provided with braking band made of carbonaceous-matrix composite material: WO2019043616 and WO2016/199021.

### Summary of the invention

As is well known, the so-called carbonaceous-matrix discs are also normally known as carbon discs or carbon-ceramic discs.

Brake discs may comprise a braking band and a brake bell that are made in separate pieces and assembled by using at least one connecting device.

The connection between the braking band and the brake bell is very important because it ensures the braking torque from the braking band to the brake bell to be transferred. Tangential constraint between the braking band and the brake bell can be made with systems that provide protuberances of the braking band that couple in respective brake bell seats so as to make a tangential constraint system between braking band and brake bell that has a particularly simple structure and thus low production costs.

The Applicant also noted that ventilation is another particularly important aspect in designing disc brakes.

It is well known indeed that in order to maximize the heat extracted from the brake disc, it is important that the air stream flows within the ventilation channels in such a way as to ensure as little pressure drops as possible, and in such a way as to maximize the heat exchange and the flow rate of the flow of overheated cooling air exiting from the radially outer edge of the braking band of the rotating disc brake.

Therefore, the Applicant was faced with the problem of making a brake disc that allows optimizing the ventilation of the brake disc, and in particular the heat exchange inside the ventilation channels.

Therefore, in a first aspect, the invention relates to a brake disc comprising a brake bell and a braking band radially outer with respect to the latter, said band and said brake bell extending around a common axis of rotation; said braking band being made of a composite material and having side braking surfaces adapted to cooperate with a respective brake caliper thus exerting a braking action on the vehicle on which said brake disc is installed.

Furthermore, the side surfaces define a plurality of ventilation channels arranged away from the axis of rotation, each ventilation channel extending along an extent direction between a radially inner opening and a radially outer opening characterized in that said ventilation channel comprises at least one rib extending for at least one length along the extent direction of the ventilation channel.

As a result, the Applicant has achieved a new optimization of heat exchange and thus cooling of the air flowing inside the ventilation channels.

For the purposes of this invention, the following definitions apply:
"Axial direction" is defined as a direction substantially coincident with or substantially parallel to the axis of rotation of the brake disc.

By "radial direction" is meant a direction substantially orthogonal to the axial direction.

By "tangential or circumferential direction" is meant a direction orthogonal to both axial and radial directions.

By "inclination angle" of the extent direction of a ventilation channel is meant the angle, measured in a plane orthogonal to the axis of rotation of the brake disc, between a direction radial to the axis of rotation of the brake disc lying in the aforesaid plane and the projection, still in the aforesaid plane, of the extent direction of the ventilation channel itself.

By "elevation angle" of the extent direction of a ventilation channel is meant the angle, measured in a plane containing the axis of rotation of the brake disc, between the extent direction of the ventilation channel and the axis of rotation of the disc.

The present invention, in one or more preferred aspects, may comprise one or more of the following features.

Preferably, the elevation angle is greater than or equal to 60°.

Conveniently, the elevation angle is greater than or equal to 75° and less than or equal to 88°.

Preferably, the elevation angle is constant along the extent direction for at least 60% of the extent of the aforesaid ventilation channel.

Advantageously, the elevation angle is constant along the extent direction for at least 90% of the extent of the ventilation channel itself. Advantageously, all the ventilation channels have the same elevation angle.

Further characteristics and advantages of the invention will become clearer from the detailed description of some preferred, but not exclusive, embodiments of a brake disc according to the present invention.

### Brief description of the drawings

This description will be set forth hereinafter with reference to the attached drawings provided for illustration purposes only and without limitation, in which:
- figure 1 shows a schematic side view of a braking band of a first embodiment of the brake disc according to the invention;
- figure 2 is a plan view of the braking band of figure 1;

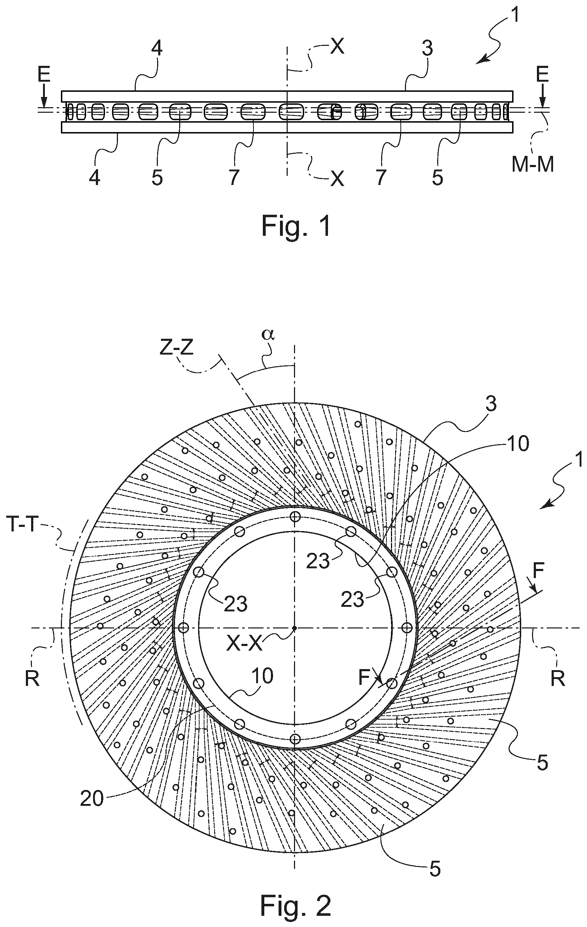

- figure 2 is a schematic sectional view of the braking band taken along to the E-E sectional plane of figure 1;

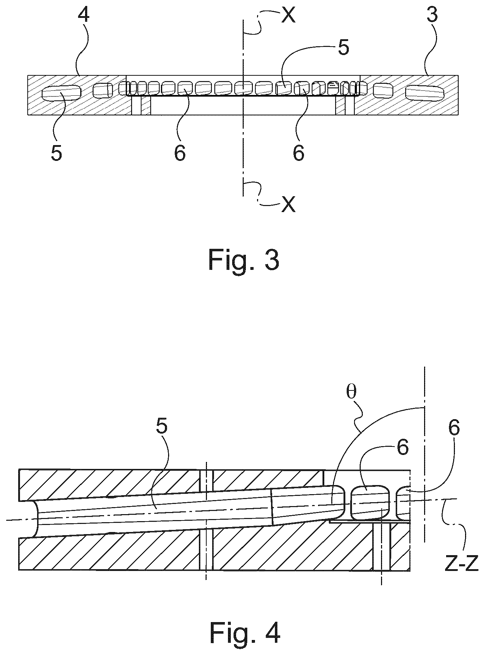

- figure 3 is a schematic sectional view of the braking band of figure 2 along a radial direction; and
- figure 4 is a schematic sectional view of a portion of the braking band taken along to the F-F sectional plane of figure 2.

### Detailed description of embodiments of the invention

With reference to the attached figures, a brake disc according to the present invention is generally denoted by 1.

The brake disc 1 comprises and is constituted by a metal brake bell 2 and a braking band 3 radially outside the latter.

The metal brake bell 2 and the braking band 3 extend around a common central axis of rotation denoted by X-X.

The axis of rotation defines an axial direction X-X coincident with or parallel to the axis of rotation, a radial direction R-R orthogonal to the axial direction X-X, and a tangential direction T-T or circumferential direction T-T orthogonal to both the axial direction X-X and the radial direction R-R.

The braking band 3, made of a composite material such as a carbon-ceramic type, is provided with two side braking surfaces denoted by 4, which are adapted to be engaged by a brake caliper (not shown) of a disc braking system.

A plurality of ventilation channels 5 is defined and formed between the two side surfaces 4 belonging to the braking band 3.

The ventilation channels 5 extend, in plan, away from the axis of rotation X-X along an extent axis Z-Z, preferably substantially rectilinear, substantially to the radially outer edge of the braking band 3.

The ventilation channels 5 are preferably arranged, in plan, inclined with respect to a direction radial to the axis of rotation X-X.

In other words, the extent axis Z-Z, in plan, of the ventilation channels 5 forms an inclination angle α greater than or equal to 30°, preferably greater than or equal to 40°, even more preferably less than or equal to 70°, with a radial direction to the axis of rotation X-X.

In order to increase the ventilation inside the ventilation channels and, consequently, the heat exchange efficiency, the extent axis Z-Z of the ventilation channels 5 forms, in addition, an elevation angle θ to the rotation axis X-X less than 90°.

The extent axis Z-Z of the ventilation channel 5 forms an elevation angle θ to the rotation axis X-X greater than 60°.

Preferably, the elevation angle θ is preferably greater than or equal to 75° and less than or equal to 88°.

The elevation angle θ is constant along the extent direction of the ventilation channel 5 for at least 60% of the extent of the channel itself.

Preferably, the elevation angle θ is constant along the extent direction of the ventilation channel 5 for at least 90% of the extent of the ventilation channel 5.

Still more preferably, the elevation angle θ is constant along the extent direction of the ventilation channel 5 across the entire extent of the ventilation channel itself.

Still in order to decrease and increase the heat transfer efficiency, all the ventilation channels 5 of the brake disk 1 itself have the same elevation angle θ.

Preferably, the ventilation channels 5 do not have a constant cross-section, along their extent axis Z-Z, but a cross section that increases away from the axis of rotation X-X.

By cross section of a ventilation channel 5 is meant a cross section of the ventilation channel 5 substantially orthogonal to the extent axis Z-Z of the ventilation channel 5 itself.

Each ventilation channel 5 comprises at least one radially inner air opening 6 facing the axis of rotation X-X, one radially outer air opening 7 arranged at the radially outer edge of the braking band 3.

Each radially inner air opening 6 has an area greater than or equal to 36 mm².

Each radially outer air opening 7 has an area greater than or equal to the area of the radially inner air opening 6.

Each radially outer air opening 7 has an area less than or equal to 700 mm².

Each ventilation channel 5 has a maximum height H, measured in a direction parallel to the axis of rotation X-X, greater than or equal to 5 mm.

Preferably, the maximum height H of the ventilation channel is less than or equal to 30mm.

Furthermore, each ventilation channel 5 comprises one or more side walls 5' arranged, according to the extent direction Z-Z, between the radially inner air opening 6 and the radially outer air opening 7.

The side walls 5', arranged around the extent axis Z-Z, laterally define the ventilation channel itself.

In the embodiment shown in the figures, there are four side walls 5' two by two facing each other. According to this embodiment, at least one length of the ventilation channel 5 has, indeed, a substantially quadrangular cross-section.

Still referring to the embodiment shown in the figures, it can be noted that all ventilation channels 5 have two facing ribs 13, however, different configurations of the brake disc 1 could be used where only some ventilation channels 5 have the rib 13 and/or where the ribs 13, inside the same ventilation channel 5 or different ventilation channels 5, are different in shape and/or size.

Furthermore, the brake disc 1 comprises a brake bell 2, which is adapted to be operationally connected to a vehicle wheel that can be combined with the braking band 3.

The braking band 3 is provided with a radially inner ring 10, which is preferably flat and continuous, wherein M-M (fig.1) denotes its median plane.

The continuous inner ring 10 has two side faces of which one faces upward and one faces downward.

The inner ring 10 may have at least one coupling element 23 that runs substantially orthogonally to the median plane M-M from a side face of the inner ring 10.

With reference to figure 2 and according to the preferred embodiment, the inner ring 10 has not just one but a plurality of coupling elements 23 distributed along a coupling circumference 20 concentric to the central axis of rotation X-X.

The coupling elements 23 provide a seat for housing coupling means 24, typically screw coupling means, and are configured to allow coupling between the metal brake bell 2 and the braking band 3.

The coupling elements 23 are spaced angularly, preferably consistently along the coupling circumference 20.

Preferably, there are eight to fourteen coupling elements 23 per brake disc 1, even more preferably there are nine to thirteen coupling elements 23 per brake disc 1.

Thanks to the above described features provided separately or in combination, it is possible to provide a solution to the cooling needs of the brake disc with optimized heat transfer inside the ventilation channels.

Various modifications may be made to the embodiments described in detail, all anyhow remaining within the protection scope of the invention, as defined by the following claims.

## Claims

1. Brake disc (1) comprising a brake bell (2) and a braking band (3) radially outer with respect to the latter, said band (2) and said brake bell (3) extending around a common axis of rotation (X-X); said braking band (2) being made of a composite material and having side braking surfaces (4) adapted to cooperate with a respective brake caliper thus exerting a braking action on the vehicle on which said brake disc (1) is installed; said side surfaces (4) defining, in addition, a plurality of ventilation channels (5) arranged away from the axis of rotation (X-X), said ventilation channels (5) extending along an extent direction (Z-Z) between a radially inner air opening (6) and a radially outer air opening (7), **characterized in that** said extent direction (Z-Z) is inclined so as to form an elevation angle (θ) less than 90° with respect to the axis of rotation (X-X).

2. Brake disc (1) according to claim 1, **characterized in that** said elevation angle (θ) is greater than or equal to 60°.

3. Brake disc (1) according to claim 1, **characterized in that** said elevation angle (θ) is greater than or equal to 75° and less than or equal to 88°.

4. Brake disc (1) according to any one of preceding claims 1 to 3, **characterized in that** said elevation angle (θ) is constant along the extent direction for at least 60% of the extent of said ventilation channel (5).

5. Brake disc (1) according to any one of preceding claims 1 to 4, **characterized in that** said elevation angle (θ) is constant along the extent direction for at least 90% of the extent of said ventilation channel (5).

6. Brake disc (1) according to any one of preceding claims 1 to 4, **characterized in that** all the ventilation channels (5) have the same elevation angle (θ).
